# EUROPEAN PATENT SPECIFICATION

(11) **EP 3 998 190 B1**
(45) Date of publication and mention of the grant of the patent: **02.10.2024**
(21) Application number: 21158126.9
(22) Date of filing: 19.02.2021
(51) Int. Cl.: B64C 1/06, A62C 3/08, B64C 1/22, B64C 1/40, B64D 11/00

(54) **LINER FOR A CARGO AND/OR ACCESSORY COMPARTMENT OF AN AIRCRAFT, AIRCRAFT WITH SUCH A LINER AND METHOD OF LINING A CARGO AND/OR ACCESSORY COMPARTMENT OF AN AIRCRAFT**
AUSKLEIDUNG FÜR EINEN FRACHT- UND / ODER ZUBEHÖRRAUM EINES FLUGZEUGS, FLUGZEUG MIT EINER SOLCHEN AUSKLEIDUNG UND VERFAHREN ZUM AUSKLEIDEN EINES FRACHT- ODER ZUBEHÖRRAUMS EINES FLUGZEUGS
REVÊTEMENT POUR UN COMPARTIMENT DE FRET ET/OU D'ACCESSOIRES D'UN AÉRONEF, AÉRONEF ÉQUIPÉ D'UN TEL REVÊTEMENT ET PROCÉDÉ DE REVÊTEMENT D'UN COMPARTIMENT DE FRET ET/OU D'ACCESSOIRES D'UN AÉRONEF

(43) Date of publication of application: 18.05.2022
(73) Proprietor: Lilium eAircraft GmbH, 82234 Wessling (DE)
(72) Inventor: Rohr, Andreas, 82234 Wessling (DE); Ketisch, Johannes, 82234 Wessling (DE)
(74) Representative: Grünecker Patent- und Rechtsanwälte PartG mbB

(56) References cited:
- EP-A1- 2 492 217
- EP-B1- 2 492 217
- FR-A1- 2 303 711
- US-A- 5 540 402
- US-A1- 2013 327 548
- US-B2- 9 556 667

## Description

### FIELD OF THE INVENTION

The present invention relates to a liner for a cargo and/or accessory compartment of an aircraft, wherein the liner is fire-resistant and gas tight to the extent of fire starving capability and keeps smoke emissions to a neglectable level in terms of flight safety; and to an aircraft with a cargo and/or accessory compartment; and to a method of lining a cargo and/or accessory compartment of an aircraft with a liner. Particularly, it relates to a liner according to the preamble of claim 1, to an aircraft according to the preamble of claim 8 and to a method of lining a cargo and/or accessory compartment of an aircraft with a liner according to claim 11.

### BACKGROUND OF THE INVENTION

Due to safety regulations, the cargo and/or accessory compartment of an aircraft must be fire resistant and gas tight to the extent of fire starving capability and it must keep smoke emissions to a neglectable level in terms of flight safety. Conventional liners used for cargo and/or accessory compartments are made of several components of a rigid monolithic composite material.

A liner according to the preamble of claim 1 is know from EP 2 492 217 A1. Another liner is known from US 2013/0327548 A1.

### SUMMARY OF THE INVENTION

According to a first aspect of the present invention defined in claim 1, a liner for a cargo and/or accessory compartment of an aircraft is provided, the liner being fire-resistant and gas tight to the extent of fire starving capability and the liner keeping smoke emissions to a neglectable level in terms of flight safety, wherein the liner comprises a bag of fire-resistant and gas tight flexible fabric. This offers a considerable reduction of weight compared to conventional design, allows the prefabrication of the complete liner outside the aircraft and therefore facilitates production and reduces installation time, and provides an improved gas-tightness as there are zero joints to be sealed during installation. The invention is particularly applicable but not limited to an electric VTOL (vertical take-off and landing) aircraft because a low weight is absolutely crucial with this type of aircraft.

According to the first aspect of the present invention, the bag is adapted to form at least a ceiling and sidewalls of the cargo and/or accessory compartment.

According to a preferred embodiment of the present invention, the bag is fashioned to be suspended from a fuselage structure of the aircraft in the manner of an inner tent. This embodiment offers the advantage of an easy installation of the liner.

According to another preferred embodiment of the present invention, the liner comprises at least one reinforcing batten for stabilizing or stiffening at least a portion of the bag. This embodiment adds to a stable and yet lightweight construction. Preferably, the reinforcing batten(s) is/are arranged at the outside of the bag such that the inside walls of the cargo and/or accessory compartment are smooth and the battens do not interfere when for example luggage is loaded or unloaded from the cargo and/or accessory compartment.

According to another preferred embodiment of the present invention, the at least one reinforcing batten is received in lugs of the bag. This embodiment offers a very easy way of stabilizing or stiffening portions of the bag using battens.

According to the first aspect of the present invention, the bag is adapted to form a floor of the cargo and/or accessory compartment, wherein the liner further comprises a floor frame for spanning a floor portion of the fabric. This embodiment offers a very lightweight construction since the floor of the cargo and/or accessory compartment is mainly formed by the fire-resistant and gas-tight flexible fabric. The floor frame is necessary in order to span and thereby stabilize the fabric.

Preferably, the floor frame is adapted to be attached to a fuselage structure of the aircraft, for example via brackets that are part of or connected with the fuselage of the aircraft.

Preferably, the frame is made of a carbon fiber reinforced polymer. This adds to a lightweight construction.

According to the first aspect of the present invention, the floor portion of the fabric is a separate piece from a remainder of the bag such that the floor portion is replaceable independently from the remainder of the bag with or without the floor frame. This facilitates maintenance and repair of the cargo and/or accessory compartment. For example, the floor portion may be detachable from the floor frame or the floor frame and the floor portion of the fabric may be detachable from the remainder of the bag.

According to an alternative embodiment not part of the present invention, the liner may comprise a rigid floor panel that is attached to the bag and that is attachable to a fuselage structure of the aircraft, for example via brackets that are part of or connected to the fuselage of the aircraft. This embodiment provides an improved stability of the floor such that heavier and/or sharp objects/luggage may be placed on the floor of the cargo and/or accessory compartment.

According to a particularly stable embodiment that is not part of the invention, the rigid floor panel is pan-shaped and comprises a bottom plate and a sidewall protruding from the bottom plate. This embodiment guarantees that the enclosing outer fuselage structure of the aircraft is protected in a floor area of the cargo and/or accessory compartment, for example if heavy and/or sharp objects slide to the side or press against the sidewall of the cargo and/or accessory compartment.

Preferably, the rigid floor panel is made of a sandwich material. This also adds to a stable and lightweight construction. It is particularly preferred if the rigid floor panel is made from a honeycomb material.

According to yet another preferred embodiment that is not part of the invention, the rigid floor panel may be protected by a protective floor cover. Preferably, the floor cover is attached to the floor panel using double sided tape. Furthermore, the protective floor cover is preferably made from a non-textile material.

According to another preferred embodiment that is not part of the invention, an edge of the rigid floor panel is protected by a scuff plate at least in a loading area of the cargo and/or accessory compartment. Thus, the loading edge of the cargo and/or accessory compartment can be made particularly robust. Preferably, the scuff plate is made of a metal material.

According to another preferred embodiment of the present invention, the bag is provided with at least one opening for a smoke detector or a continuous-loop system and/or a light and/or a floor frame fastener and/or a floor panel fastener. The opening(s) is/are preferably sealed around cables and fasteners using jubilee clips or similar.

According to another preferred embodiment of the present invention, the fabric is a silicone coated glass and/or aramid fabric providing the necessary strength and flame resistance. However, any other fabric made from high tensile strength flexible fibers that provides the necessary strength and flame resistance may be used.

According to yet another preferred embodiment, the liner is provided with a restraint net arranged within the bag of fire-resistant and gas tight flexible fabric. The restraint net is used to secure the cargo to the rigid floor panel or to the floor frame and/or floor portion of the fabric.

Preferably, the restraint net is constructed from either polyester braid or webbing formed into a matrix of strap members.

If the restraint net is constructed from polyester braid, the polyester braid is preferably spliced together at each intersection to obtain the required profile. If the restraint net is constructed from webbing, the webbing is preferably stitched together at each intersection.

Preferably, suitable attachment fittings are provided to secure the restraint net to the rigid floor panel or to the floor frame and/or floor portion of the fabric.

The attachment fittings are preferably quick release fittings to allow the restraint net to be removed with minimal effort. In order to save weight it may be possible to permanently attach the restrain net more securely in certain locations, i.e. at the most forward attachment locations, thus reducing the amount of metalwork required.

At the rear of the restraint net, i.e. at a boot lid of the cargo and/or accessory compartment, adjustment buckles are preferably built in to allow the restraint net to be tensioned down onto the cargo, therefore minimizing movement during flight.

To facilitate loading and unloading, the net is preferably suspended by elasticated bungees, so when un-tensioned, the cargo compartment area is maintained and the net is lifted away from the cargo to facilitate loading and unloading.

According to yet another embodiment of the present invention, the bag comprises a loading opening through which luggage and/or other cargo items can be loaded into or unloaded from the cargo and/or accessory compartment, wherein portions of the bag around the loading opening are foldable such that the loading opening may be closed by folding said portions together.

According to a second aspect of the present invention, an aircraft comprising a cargo and/or accessory compartment is provided, wherein the cargo and/or accessory compartment is formed by a liner according to the first aspect of the invention, in particular according to any or all of the above mentioned embodiments of the first aspect.

According to a preferred embodiment, a sidewall of the liner is spanned at a distance from an enclosing outer fuselage structure of the aircraft. Thus, the enclosing aircraft fuselage structure is protected from objects deflecting the sidewalls of the bag.

According to a particularly preferred embodiment, at least one impact dampening pad is arranged between the sidewall of the liner and the enclosing outer fuselage structure of the aircraft. This guarantees maximum protection against objects deflecting the sidewalls of the liner/bag.

Preferably, the impact dampening pad is made of a foam, in particular of an expanded polypropylene (EPP).

According to another preferred embodiment, the cargo and/or accessory compartment is accessible from the outside through a boot lid of the aircraft, wherein the bag of fire-resistant and gas tight flexible fabric is provided with an opening in the area of the boot lid.

Preferably, an outer fire-resistant sealing is provided between a door structure of the boot lid and the fuselage structure.

Preferably, an inner fire-resistant sealing is provided between the door structure of the boot lid and the bag. Preferably, an edge of the bag around the opening of the bag is attached to and lying flat against the fuselage structure.

Preferably, the door structure of the boot lid is lined with the same fire-resistant and gas tight flexible fabric that the bag is made of.

According to a third aspect of the present invention, a method of lining a cargo and/or accessory compartment of an aircraft with a liner is provided, the method comprising the steps of:
- fully or partially preassembling a liner according to the first aspect of the invention,
- folding the preassembled liner,
- placing the folded liner inside a fuselage structure of the aircraft,
- unfolding the preassembled liner and attaching the preassembled liner to the fuselage structure of the aircraft, and
- optionally, attaching the bag of the preassembled liner to the floor frame or to the rigid floor panel if the floor frame or rigid floor panel are installed prior to bag installation.

According to a preferred embodiment, the liner is attached to the fuselage structure at fastening points provided at the ceiling and at the floor of the cargo and/or accessory compartment.

### BRIEF DESCRIPTION OF THE DRAWINGS

Embodiments of the present invention will be explained in more detail further below with reference to the drawings in which:
- Fig. 1:: shows a side view of an aircraft according to the invention with a cargo and/or accessory compartment,
- Fig. 2:: shows the aircraft from Fig. 1 with an open boot lid in a perspective rear view,
- Fig. 3:: shows a detail longitudinal section view of the aircraft shown in Figs. 1 and 2 with a cargo and/or accessory compartment according to a first embodiment that is not part of the invention,
- Fig. 4:: shows a cross section view of the cargo and/or accessory compartment shown in Fig. 3 along sections lines IV-IV indicated in Fig. 3,
- Fig. 5:: shows a cross section view of a cargo and/or accessory compartment according to a second embodiment that is not part of the invention,
- Fig. 6:: shows a cross section view of a cargo and/or accessory compartment according to a third embodiment that is part of the invention,
- Fig. 7:: shows a detail perspective view of the floor of the cargo and/or accessory compartment shown in Fig. 6,
- Fig. 8:: shows the sealing arrangement of the boot lid of the aircraft from Figs. 1 and 2 in a detail section view,
- Fig. 9:: shows a cargo and/or accessory compartment according to a fourth embodiment of the invention in a perspective view with a fully opened loading opening, and
- Fig. 10: shows the cargo and/or accessory compartment of Fig. 9 with an almost fully closed loading opening.

### DETAILED DESCRIPTION OF THE INVENTION

In the following, the same parts are designated by the same reference signs. If a Figure comprises reference signs which are not addressed in detail in the associated description of the Figure, reference is made to the preceding or following descriptions of the Figures.

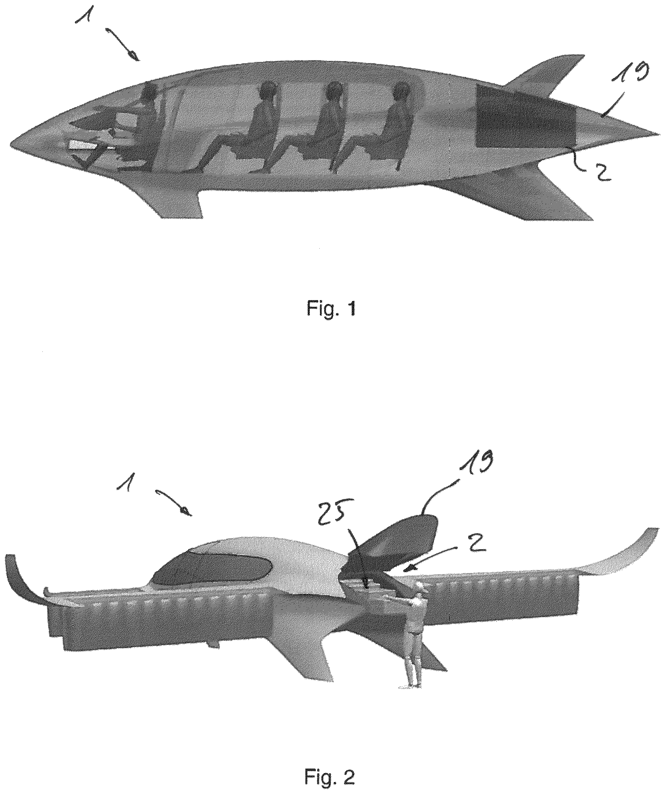

Fig. 1 shows a side view of an aircraft 1. By way of example, the aircraft 1 may be an electric vertical take-off and landing aircraft (eVTOL). The aircraft 1 thus moves in a basically vertical direction during takeoff and landing and in basically horizontal direction during transition flight. However, the invention is not limited to such a type of aircraft. The aircraft 1 comprises a fuselage, a pair of wings arranged at or near the rear end of the aircraft and a cargo and/or accessory compartment 2 that is also arranged at the rear of the aircraft 1 and that is accessible from the outside through a pivotable boot lid 19.

Fig. 2 shows the aircraft 1 in a perspective rear view with the boot lid 19 in an open position such that luggage 25 and/or other cargo items can be loaded into or unloaded from the cargo and/or accessory compartment 2.

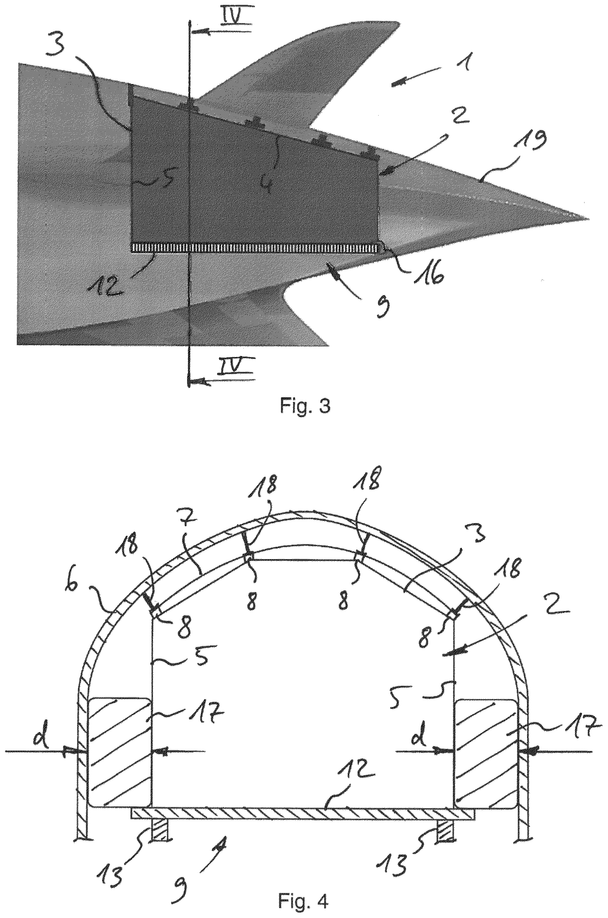

Figure 3 shows a detail longitudinal section view of the aircraft shown in Figs. 1 and 2 with a cargo and/or accessory compartment 2 according to a first embodiment that is not part of the invention. Fig. 4 shows a cross section view of the cargo and/or accessory compartment 2 according to the first embodiment along section line IV-IV indicated in Fig. 3. The cargo and/or accessory compartment 2 is formed by a liner that comprises a bag 3 of fire resistant and gas tight flexible fabric. The fabric is preferably a silicone coated glass fabric. The bag 3 forms the ceiling 4 and the sidewalls 5 of the cargo and/or accessory compartment 2. It is suspended from the fuselage structure 6 of the aircraft in the manner of an inner tent using suitable fasteners 18.

A ceiling portion of the bag 3 may be stabilized by several reinforcing battens 7, one of which is shown in Fig. 4. The reinforcing battens 7 may run along the outside of the bag 3 and may be received in lugs 8 of the bag 3 as shown in Fig. 4.

The floor 9 of the liner or compartment 2 is formed by a rigid floor panel 12 attached to a lower end of the bag 3 of fire resistant and gas tight flexible fabric, for example by glueing. The floor panel 12 is preferably made of a sandwich material, in particular of a honeycomb material. The upper surface of the rigid floor panel 12 may be protected by a protective floor cover preferably made of a non-textile material. For example, the floor cover may be attached to the floor panel using double sided tape. The rigid floor panel 12 is fixed to brackets 13 that may form part of the fuselage structure 6 or may be connected to the fuselage structure 6.

As can be seen in Fig. 4, the sidewalls 5 of the liner are spanned at a distance d from the enclosing outer fuselage structure 6 of the aircraft. Thus, the enclosing aircraft fuselage structure is protected from objects deflecting the sidewalls 5 of the bag 3. For maximum protection, dampening pads 17 made of a foam, preferably of an expanded polypropylene, may be arranged between the sidewalls 5 of the liner and the enclosing outer fuselage structure 6 of the aircraft 1.

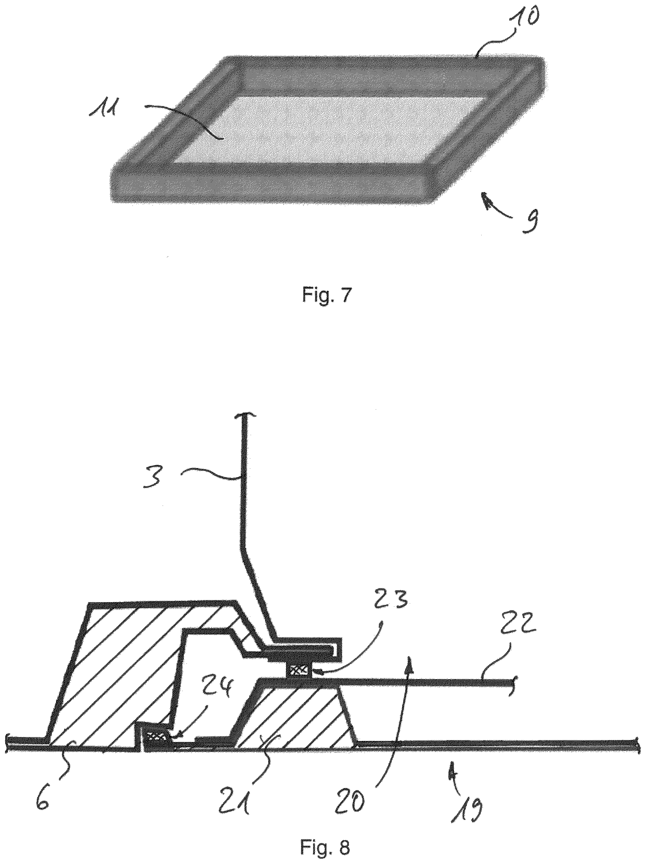

As mentioned above, the cargo and/or accessory compartment 2 is accessible from the outside through a boot lid 19 of the aircraft 1. To this end, the bag 3 of fire-resistant and gas tight flexible fabric must be provided with an opening in the area of the boot lid 19. Said opening 20 of the bag 3 is shown in Fig. 8. A gas tight closure may be guaranteed by a double sealing that is also shown in Fig. 8. An outer fire-resistant sealing 24 is provided between a door structure 21 of the boot lid 19 and the fuselage structure 6. An inner fire-resistant sealing 23 is provided between the door structure 21 of the boot lid 19 and the bag 3. As shown in Fig. 8, an edge of the bag 3 around the bag's opening is attached to and lying flat against the fuselage structure 6. The door structure 21 of the boot lid 19 may be lined with the same fire-resistant and gas tight flexible fabric that the bag 3 is made of. This piece of door fabric is designated in Fig. 8 at 22.

As shown in Fig. 3, a rear loading edge of the rigid floor panel 12 may be protected by a scuff plate 16. Preferably, the scuff plate 16 is made of a metal material.

The bag 3 may be provided with openings for a smoke detector or a continuous-loop system and/or a light and/or a floor frame fastener and/or a floor panel fastener. The openings are preferably sealed around cables and fasteners using jubilee clips or similar.

Furthermore, the cargo and/or accessory compartment 2 may either be sized for the resulting differential pressure or it may comprise a small valve to equalize the pressure while restricting the airflow so that a fire will consume more oxygen than what is potentially provided through the valve. The valves is installed to relief overpressure in the compartment during ascent. During descent, the compartment may be compressed without a differential pressure relief or a relief may be initiated by manual deployment of a separate relief valve. The valve(s) may be arranged in the bag or in the rigid floor panel.

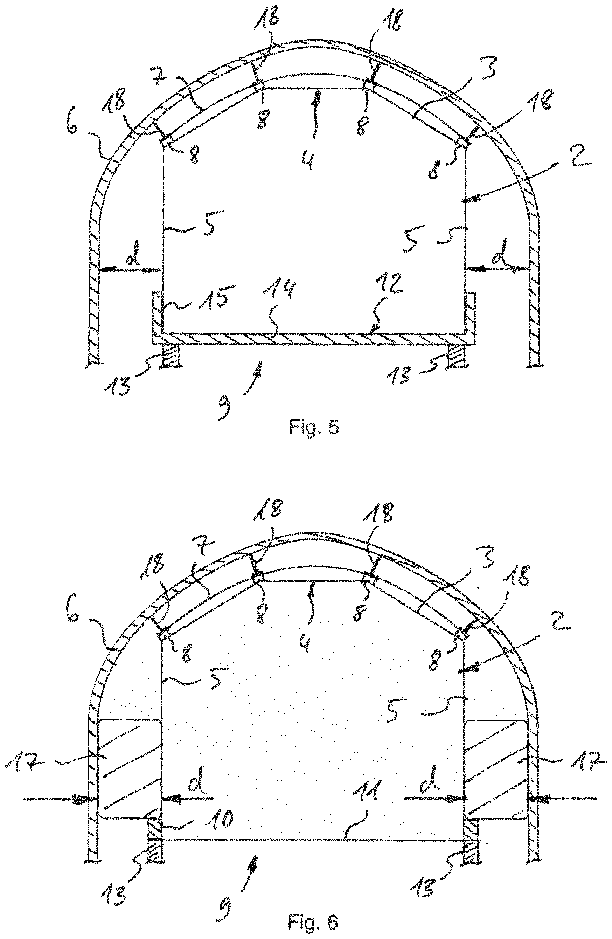

Fig. 5 shows a second embodiment of the cargo and/or accessory compartment 2 that is not part of the invention. The second embodiment is very similar to the first embodiment shown in Figs. 3 and 4 and differs from the first embodiment in that the rigid floor panel 12 is pan-shaped and comprises a bottom plate 14 and a sidewall 15 protruding from the bottom plate 14. This guarantees that the enclosing outer fuselage structure 6 of the aircraft 1 is protected in a floor area of the cargo and/or accessory compartment 2, for example if heavy and/or sharp objects slide to the side or press against a sidewall 5 of the bag 3. With this second embodiment, the dampening pads 17 of the first embodiment may be omitted. However, depending on the distance d and the height of the floor panel's sidewall 15, it may still be advantageous to provide dampening pads for a better protection of the aircraft's fuselage.

Fig. 6 and 7 show a third embodiment of the cargo and/or accessory compartment 2 that is part of the invention. The third embodiment differs from the first and second embodiments shown in figures 3 to 5 in that the floor 9 is not formed by a rigid floor panel. Instead, the bag 3 is adapted to form the floor of the cargo and/or accessory compartment 2. To this end, the liner further comprises a floor frame 10 spanning a floor portion 11 of the fabric. This embodiment offers a very lightweight construction since the floor of the cargo and/or accessory compartment 2 is mainly formed by the fire-resistant and gas-tight flexible fabric. The floor frame 10 is necessary in order to span and thereby stabilize the fabric. Similar to the rigid floor panel of the first and second embodiments, the floor frame 10 is attached to brackets 13 of the fuselage structure 6 of the aircraft 1, for example via screw connections. The frame may be made of a carbon fiber reinforced polymer which adds to a lightweight construction.

The floor portion 11 of the fabric is a separate piece from a remainder of the bag 3 such that the floor portion 11 is replaceable independently from the remainder of the bag with or without the floor frame 10. This facilitates maintenance and repair of the cargo and/or accessory compartment 2. For example, the floor portion 11 may be detachable from the floor frame 10 eir the and the floor portion 11 of the fabric is detachable from the remainder of the bag 3.

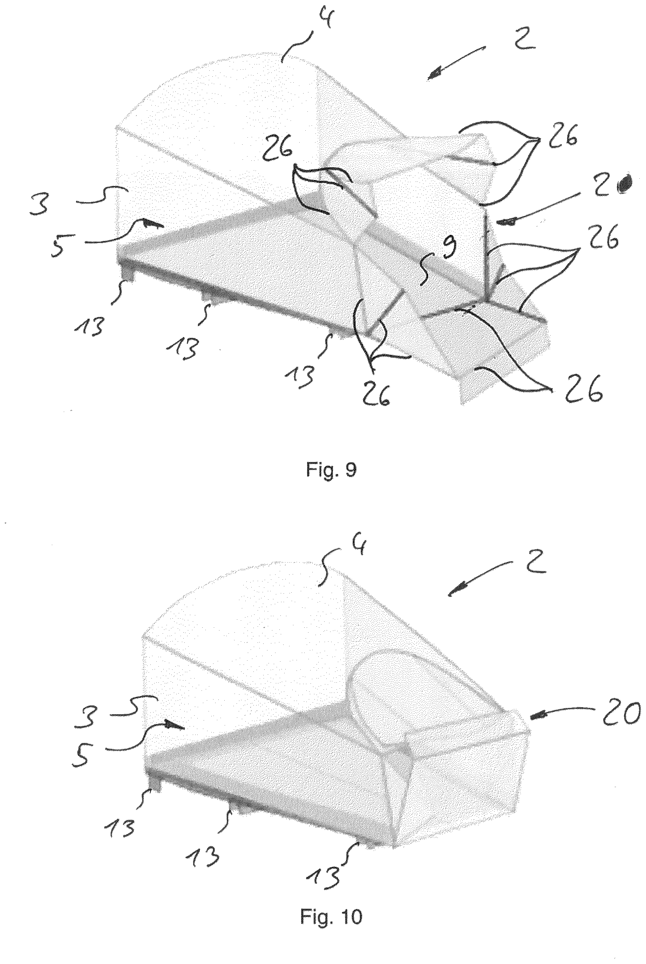

Fig. 9 shows a schematic perspective view of a cargo and/or accessory compartment 2 according to a fourth embodiment of the invention. The cargo and/or accessory compartment 2 is similar to the cargo and/or accessory compartments according to the first, second and third embodiments. It is also formed by a liner that comprises a bag 3 of fire resistant and gas tight flexible fabric. The bag 3 comprises a loading opening 20 through which luggage and/or other cargo items can be loaded into or unloaded from the cargo and/or accessory compartment 2. Fig. 9 shows the loading opening 20 in a fully opened state. Portions of the bag 3 around the loading opening 20 are foldable along folding lines 26 such that the opening 20 may be closed by folding said portions together as shown in Fig. 10 which shows the opening 20 in an almost fully closed state.

The cargo and/or accessory compartment according to the first, second, third and fourth embodiments may easily be installed as follows:
- fully or partially preassembling the liner,
- folding the preassembled liner,
- placing the folded liner inside the fuselage structure of the aircraft,
- unfolding the preassembled liner and attaching the preassembled liner to the fuselage structure of the aircraft, and
- optionally, attaching the bag of the preassembled liner to the floor frame or to the rigid floor panel if the floor frame or rigid floor panel are installed prior to bag installation.

The liner may be attached to the fuselage structure at fastening points provided at the ceiling and at the floor of the cargo and/or accessory compartment.

### LIST OF REFERENCE SIGNS

- 1: aircraft
- 2: cargo and/or accessory compartment
- 3: bag
- 4: ceiling
- 5: sidewall
- 6: fuselage structure
- 7: reinforcing batten
- 8: lug
- 9: floor
- 10: floor frame
- 11: floor portion
- 12: floor panel
- 13: bracket
- 14: bottom plate
- 15: sidewall
- 16: scuff plate
- 17: dampening pad
- 18: fastener
- 19: boot lid
- 20: bag opening
- 21: door structure
- 22: door fabric
- 23: inner fire-resistant sealing
- 24: outer fire-resistant sealing
- 25: luggage
- 26: folding line
- d: distance

## Claims

1. A liner for a cargo and/or accessory compartment (2) of an aircraft (1), wherein the liner is fire-resistant and gas tight to the extent of fire starving capability and keeps smoke emissions to a neglectable level in terms of flight safety, wherein the liner comprises a bag (3) of fire-resistant and gas tight flexible fabric, wherein the bag (3) is adapted to form at least a ceiling (4) and sidewalls (5) of the cargo and/or accessory compartment (2), and wherein the bag (3) is adapted to form a floor (9) of the cargo and/or accessory compartment (2), wherein the liner further comprises a floor frame (10) for spanning a floor portion (11) of the fabric, **characterized in that** the floor portion (11) of the fabric is a separate piece from a remainder of the bag (3) such that the floor portion (11) is replaceable independently from the remainder of the bag (3) with or without the floor frame (10).

2. The liner according to claim 1, **characterized in that** the bag is fashioned to be suspended from a fuselage structure of the aircraft in the manner of an inner tent.

3. The liner according to claim 1, **characterized in that** the liner comprises at least one reinforcing batten (7) for stabilizing or stiffening at least a portion of the bag (3), wherein the at least one reinforcing batten (7) is preferably received in lugs (8) of the bag (3).

4. The liner according to claim 1 or 3, **characterized in that** the floor frame is adapted to be attached to a fuselage structure of the aircraft.

5. The liner according to claim 1, **characterized in that** the frame is made of a carbon fiber reinforced polymer.

6. The liner according to any one of claims 1 to 5, **characterized in that** the bag (3) is provided with at least one opening for a smoke detector or a continuous-loop system and/or a light and/or a floor frame fastener (18) and/or a floor panel fastener (18).

7. The liner according to any one of claims 1 to 6, **characterized in that** the fabric is a silicone coated glass and/or aramid fabric.

8. An aircraft (1) comprising a cargo and/or accessory compartment (2), **characterized in that** the cargo and/or accessory compartment (2) is formed by a liner according to any one of claims 1 to 7.

9. The aircraft (1) according to claim 8, **characterized in that** a sidewall of the liner is spanned at a distance from an enclosing outer fuselage structure (6) of the aircraft (1).

10. The aircraft (1) according to claim 9, **characterized in that** at least one impact dampening pad (17) is arranged between the sidewall (15) of the liner and the enclosing outer fuselage structure (6) of the aircraft (1), wherein the impact dampening pad (17) is preferably made of a foam, in particular of an expanded polypropylene.

11. A method of lining a cargo and/or accessory compartment (2) of an aircraft (1) with a liner, comprising the steps of:
- fully or partially preassembling a liner according to one of claims 1 to 7,
- folding the preassembled liner,
- placing the folded liner inside a fuselage structure (6) of the aircraft (1),
- unfolding the preassembled liner and attaching the preassembled liner to the fuselage structure (6) of the aircraft (1), and
- optionally, attaching the bag (3) of the preassembled liner to the floor frame (10) or to the rigid floor panel (12) if the floor frame or rigid floor panel (12) are installed prior to bag (3) installation.

## Patentansprüche

1. Auskleidung für einen Fracht- und/oder Zubehörraum(2) eines Flugzeugs (1), wobei die Auskleidung derart feuerbeständig und gasdicht ist, dass sie die Fähigkeit zum Aushungern eines Feuers besitzt und die Rauchemissionen auf einem vernachlässigbaren Niveau in Bezug auf die Flugsicherheit hält, wobei die Auskleidung eine Tasche (3) aus feuerbeständigem und gasdichtem flexiblem Gewebe umfasst, wobei die Tasche (3) dazu ausgebildet, mindestens eine Decke (4) und Seitenwände (5) des Fracht- und/oder Zubehörraums (2) auszubilden, und wobei die Tasche (3) derart ausgebildet ist, einen Boden (9) des Fracht- und/oder Zubehörfachs (2) auszubilden, wobei die Auskleidung ferner einen Bodenrahmen (10) zum Aufspannen eines Bodenabschnitts (11) des Gewebes umfasst, **dadurch gekennzeichnet, dass** der Bodenabschnitt (11) des Gewebes ein separates Stück von einem Rest der Tasche (3) ist, so dass der Bodenabschnitt (11) unabhängig vom Rest der Tasche (3) mit oder ohne den Bodenrahmen (10) austauschbar ist.

2. Auskleidung nach Anspruch 1, **dadurch gekennzeichnet, dass** die Tasche derart gestaltet ist, dass sie nach Art eines Innenzelts an einer Rumpfstruktur des Flugzeugs aufgehängt werden kann.

3. Auskleidung nach Anspruch 1, **dadurch gekennzeichnet, dass** die Auskleidung mindestens eine Verstärkungsleiste (7) zur Stabilisierung oder Versteifung mindestens eines Teils der Tasche (3) umfasst, wobei die mindestens eine Verstärkungsleiste (7) vorzugsweise in Laschen (8) der Tasche (3) aufgenommen ist.

4. Innenbehälter nach Anspruch 1 oder 3, **dadurch gekennzeichnet, dass** der Bodenrahmen zur Befestigung an einer Rumpfstruktur des Flugzeugs geeignet ist.

5. Der Liner nach Anspruch 1, **dadurch gekennzeichnet, dass** der Rahmen aus einem kohlenstofffaserverstärkten Polymer hergestellt ist.

6. Auskleidung nach einem der Ansprüche 1 bis 5, **dadurch gekennzeichnet, dass** die Tasche (3) mit mindestens einer Öffnung für einen Rauchmelder oder ein Endlosschleifensystem und/oder eine Leuchte und/oder eine Bodenrahmenbefestigung (18) und/oder eine Bodenplattenbefestigung (18) versehen ist.

7. Auskleidung nach einem der Ansprüche 1 bis 6, **dadurch gekennzeichnet, dass** das Gewebe ein silikonbeschichtetes Glas- und/oder Aramidgewebe ist.

8. Flugzeug (1) mit einem Fracht- und/oder Zubehörraum (2), **dadurch gekennzeichnet, dass** der Fracht- und/oder Zubehörraum (2) durch eine Auskleidung nach einem der Ansprüche 1 bis 7 gebildet ist.

9. Flugzeug (1) nach Anspruch 8, **dadurch gekennzeichnet, dass** eine Seitenwand der Auskleidung in einem Abstand von einer umschließenden äußeren Rumpfstruktur (6) des Flugzeugs (1) aufgespannt ist.

10. Flugzeug (1) nach Anspruch 9, **dadurch gekennzeichnet, dass** zwischen der Seitenwand (15) des Liners und der umschließenden äußeren Rumpfstruktur (6) des Flugzeugs (1) mindestens ein Aufpralldämpfungspolster (17) angeordnet ist, wobei das Aufpralldämpfungspolster (17) vorzugsweise aus einem Schaumstoff, insbesondere aus einem expandierten Polypropylen, besteht.

11. Verfahren zum Auskleiden eines Fracht- und/oder Zubehörraums (2) eines Flugzeugs (1) mit einer Auskleidung, das die folgenden Schritte umfasst:
- vollständiges oder teilweises Vormontieren einer Auskleidung nach einem der Ansprüche 1 bis 7,
- Falten der vormontierten Auskleidung,
- Einsetzen der gefalteten Auskleidung in eine Rumpfstruktur (6) des Flugzeugs (1),
- Entfalten der vormontierten Auskleidung und Anbringen der vormontierten Auskleidung an der Rumpfstruktur (6) des Flugzeugs (1), und
- optionale Befestigung des Beutels (3) der vormontierten Auskleidung am Bodenrahmen (10) oder an der starren Bodenplatte (12), wenn der Bodenrahmen oder die starre Bodenplatte (12) vor der Installation des Beutels (3) installiert werden.

## Revendications

1. Revêtement pour compartiment de fret et/ou compartiment d'accessoires (2) d'un aéronef (1), dans lequel le revêtement est résistant au feu et étanche aux gaz au point de pouvoir éteindre le feu et de maintenir les émissions de fumée à un niveau négligeable en termes de sécurité de vol, dans lequel le revêtement comprend un sac (3) en tissu souple résistant au feu et étanche aux gaz, dans lequel le sac (3) est conçu pour constituer au moins un plafond (4) et des parois latérales (5) du compartiment de fret et/ou du compartiment d'accessoires (2), et dans lequel le sac (3) est conçu pour constituer un plancher (9) du compartiment de fret et/ou d'accessoires (2), dans lequel le revêtement comprend en outre un cadre de plancher (10) pour recouvrir une partie du plancher (11) du tissu, **caractérisé en ce que** la partie du plancher (11) du tissu est une pièce séparée du reste du sac (3) de sorte que ladite partie du plancher (11) peut être remplacée indépendamment du reste du sac (3) avec ou sans le cadre de plancher (10).

2. Revêtement selon la revendication 1, **caractérisé par le fait que** le sac est conçu pour être suspendu à la structure du fuselage de l'avion à la manière d'une tente intérieure.

3. Revêtement selon la revendication 1, **caractérisé par le fait que** le revêtement comprend au moins une latte de renforcement (7) pour stabiliser ou raidir au moins une partie du sac (3), dans lequel au moins une latte de renforcement (7) est de préférence logée dans des pattes (8) du sac (3).

4. Revêtement selon les revendications 1 ou 3, **caractérisé par le fait que** le cadre du plancher est conçu pour se fixer à la structure du fuselage de l'aéronef.

5. Revêtement selon la revendication 1, **caractérisé par le fait que** le cadre est constitué d'un polymère renforcé de fibres de carbone.

6. Revêtement selon l'une des revendications 1 à 5, **caractérisé par le fait que** le sac (3) est pourvu d'au moins une ouverture pour un détecteur de fumée ou un système de boucle continue et/ou une lumière et/ou une fixation de cadre de plancher (18) et/ou une fixation de panneau de plancher (18).

7. Revêtement selon l'une des revendications 1 à 6, **caractérisé par le fait que** le tissu est un tissu de verre et/ou d'aramide enduit de silicone.

8. Aéronef (1) comprenant un compartiment de fret et/ou un compartiment d'accessoires (2), **caractérisé par le fait que** le compartiment de fret et/ou le compartiment d'accessoires (2) est constitué d'un revêtement selon l'une des revendications 1 à 7.

9. Aéronef (1) selon la revendication 8, **caractérisé par le fait qu'**une paroi latérale du revêtement se trouve à une certaine distance d'une structure extérieure de fuselage (6) de l'aéronef (1).

10. Aéronef (1) selon la revendication 9, **caractérisé en ce qu'au** moins un coussin amortisseur d'impact (17) est disposé entre la paroi latérale (15) du revêtement et la structure extérieure du fuselage (6) de l'aéronef (1), le coussin amortisseur d'impact (17) étant de préférence constitué d'une mousse, en particulier d'un polypropylène expansé.

11. Procédé de revêtement d'un compartiment de fret et/ou d'un compartiment d'accessoires (2) d'un aéronef (1), comprenant les étapes suivantes :
- préassemblage total ou partiel d'un revêtement selon l'une des revendications 1 à 7,
- plier le revêtement préassemblé,
- placer le revêtement plié à l'intérieur d'une structure de fuselage (6) de l'aéronef (1),
- déplier le revêtement préassemblé et fixer le revêtement préassemblé à la structure du fuselage (6) de l'aéronef (1), et
- éventuellement, fixer le sac (3) du revêtement préassemblé au cadre de plancher (10) ou au panneau de plancher rigide (12) si le cadre de plancher ou le panneau de plancher rigide (12) sont posés avant l'installation du sac (3).
